Europäisches Patentamt

European Patent Office

Office européen des brevets

(11) EP 0 746 090 A2

(19)

(12) **EUROPÄISCHE PATENTANMELDUNG**

(43) Veröffentlichungstag:
04.12.1996 Patentblatt 1996/49

(51) Int Cl.$^6$: **H02P 8/00**

(21) Anmeldenummer: 96890089.4

(22) Anmeldetag: 22.05.1996

(84) Benannte Vertragsstaaten:
**DE FR GB IT**

(30) Priorität: **30.05.1995 AT 909/95**

(71) Anmelder: **LST laser & Strahl Technik Herstellungs- und Handelsgesellschaft m.b.H.**
**1130 Wien (AT)**

(72) Erfinder: **Gutwillinger, Peter, Ing.**
**1160 Wien (AT)**

(74) Vertreter: **Gibler, Ferdinand, Dipl.Ing. Dr. techn.**
**Dorotheergasse 7/14**
**1010 Wien (AT)**

(54) **Verfahren zur Läuferpositionsbestimmung für einen Rotations- oder Linearmotor**

(57) Verfahren zur Läuferpositionsbestimmung für einen Rotations- oder Linear-Motor, z.B. einen Schrittmotor, einen Synchronmotor od. dgl., mit zumindest zwei Ständerwicklungen (6, 60) und einem Läufer mit ausgeprägten Polen, bei welchem in einem Regelablauf der Istwert der Läuferposition, z.B. Läufer-Drehwinkel oder Läufer-Verschiebung, gegenüber einem angesteuerten Sollwert bestimmt und der Erregerstrom zum Erreichen der Sollwert-Position des Läufers in Abhängigkeit der Induktivität der angesteuerten Ständerwicklungen geändert wird, wobei dem Erregerstrom der angesteuerten Ständerwicklungen (6, 60) ein periodischer Meßstrom überlagert wird, der eine größere Frequenz als die Lauffrequenz des Motors aufweist und die Erregung der Ständerwicklung im wesentlichen nicht beeinflußt, und der durch den Meßstrom bewirkte Blindspannungsabfall an der Ständerwicklung gemessen und daraus die Induktivität ermittelt wird und Schaltungsanordnung zur Durchführung des Verfahrens.

EP 0 746 090 A2

**Beschreibung**

Die Erfindung betrifft ein Verfahren zur Läuferpositionsbestimmung für einen Rotations- oder Linear-Motor, z.B. einen Schrittmotor, einen Synchronmotor od. dgl., mit zumindest zwei Ständerwicklungen und einem Läufer mit ausgeprägten Polen, bei welchem in einem Regelablauf der Istwert der Läuferposition, z.B. Läufer-Drehwinkel oder Läufer-Verschiebung, gegenüber einem angesteuerten Sollwert bestimmt und der Erregerstrom zum Erreichen der Sollwert-Position des Läufers in Abhängigkeit der Induktivität der angesteuerten Ständerwicklungen geändert wird.

Weiters betrifft die Erfindung eine Schaltungsanordnung zur Durchführung des Verfahrens, wobei zum Ansteuern der Ständerwicklungen des Motors diese mit Erregerstromgeneratoren verbunden sind und jeweils ein Steuereingang dieser Erregerstromgeneratoren zum Ausgleichen der Sollwertabweichung der Läuferposition mit dem Ausgang jeweils einer Regelschaltung verbunden sind, deren Ausgangsspannung durch die Induktivität der angesteuerten Ständerwicklung bestimmt ist, wobei die Ständerwicklungen mit dem Eingang jeweils einer Meßschaltung verbunden sind und deren Ausgänge mit den Eingängen der Regelschaltungen verbunden sind.

Bekannte Verfahren dieser Art finden besonders dort ihre Anwendung, wo eine Läuferpositionsbestimmung eines Motors durch einen z.B. auf der Welle angeordneten Sensor nicht durchgeführt werden kann bzw. wenn die Anordnung eines derartigen Sensors vermieden werden soll.

Wird z.B. ein Schrittmotor im sogenannten Vollschritt- oder Halbschrittbetrieb betrieben, so fährt der Läufer des Motors genau die dem an seinen Ständerwicklungen angelegten Ansteuerimpulsen entsprechende Position an, auch wenn dieser Schrittmotor nicht durch eine Positions-Regeleinrichtung angesteuert ist. Voraussetzung ist jedoch, daß der Motor durch die mechanische Last nicht überbelastet ist, d.h. daß die Ansteuerimpulse so energiereich sind, daß die mechanische Belastung des Motors überwunden werden kann.

Schrittmotoren können durch Ansteuerung ihrer Ständerwicklungen mit sinusförmigem Strom im sogenannten "Mikroschrittbetrieb" gefahren werden. Normalerweise können derartig betriebene Schrittmotoren auch ohne einen Regelkreis, d.h. ohne Nachmessung und Korrektur der Position eine Sollposition exakt anfahren. Ist ein Schrittmotor jedoch veränderlichen bzw. unbekannten Belastungen unterworfen, ist es, um eine exakte Positionierung zu erreichen, notwendig, die aktuelle Position des Läufers zu bestimmen und gegebenenfalls zu korrigieren; im wesentlichen also einen Positions-Regelkreis vorzusehen.

Aus IEEE Transactions on Industrial Electronics, Vol. 36, No. 4, 1989 ist ein Verfahren zur Läuferpositionsbestimmung von Schrittmotoren bekannt geworden, wobei die Anstiegszeit des Erregerstromes gemessen wird. Werden nämlich die Ständerwicklungen von Schrittmotoren mit ausgeprägten Läuferpolen mit einer Spannung angesteuert, so hängt die Anstiegszeit des sich dadurch ausbildenden Erregerstromes von der Läuferposition ab. Da für jede Läuferposition die zugehörige Anstiegszeit bekannt ist, kann durch Vergleich dieser bekannten Werte mit dem Meßergebnis die aktuelle Läuferposition bestimmt werden.

Das Vergleichen der gemessenen mit den bekannten Anstiegszeiten erfordert bei der Realisierung jedoch einen aufwendigen Schaltungsaufbau, auch kann dieser Vergleich nicht durch eine Rechenoperation ersetzt werden, da die Abhängigkeit der Erregerstromanstiegszeit von der Läuferposition nicht ausreichend genau durch eine mathematische Funktion beschrieben werden kann.

Durch die WO 92/01331 wurde ein Verfahren und eine Schaltungsanordnung zur sensorlosen Drehwinkelerfassung einer dämpferlosen, vorzugsweise permanenterregten, über einen Stromrichter gespeisten Synchronmaschine durch Meßsignale bekannt. Als Meßsignale werden dabei vom speisenden Umrichter generierte Spannungssprünge verwendet und die ermittelten Meßdaten einem Rechner zugeführt, der aus der Abhängigkeit der Statorreaktanz die Rotorstellung berechnet. Zur Durchführung der notwendigen Messungen übernimmt ein eigenes Meßmodul die Kontrolle über das Maschinenansteuersystem, führt die Messungen durch und übergibt anschließend die Kontrolle wieder an die Regeleinrichtung der Maschine zurück.

Die Ermittlung der Läuferposition nach dieser Methode ist jedoch relativ aufwendig, wodurch auch eine dementsprechende Schaltungsanordnung sehr aufwendig ist. So müssen z.B. zur geregelten Ansteuerung und zur Durchführung der Positionsmessung zwei separate Baugruppen vorgesehen werden.

Aufgabe der Erfindung ist es daher, ein Verfahren der eingangs erwähnten Art vorzuschlagen, das eine genaue Läuferpositionsbestimmung auf einfache Weise ermöglicht und das durch einen einfachen Schaltungsaufbau realisiert werden kann.

Erfindungsgemäß wird dies dadurch erreicht, daß dem Erregerstrom der angesteuerten Ständerwicklungen ein periodischer Meßstrom überlagert wird, der eine größere Frequenz als die Lauffrequenz des Motors aufweist und die Erregung der Ständerwicklung im wesentlichen nicht beeinflußt, und daß der durch den Meßstrom bewirkte Blindspannungsabfall an der Ständerwicklung gemessen und daraus die Induktivität ermittelt wird.

Dadurch kann die Läuferposition durch die Induktivitätsbestimmung auf einfache und genaue Weise auf ihren Sollwert eingestellt werden.

In Weiterbildung der Erfindung kann vorgesehen sein, daß der Meßstrom dreieckförmig ist. Dadurch kann die Induktivität der angesteuerten Wicklung mittels einer einfachen Berechnung ermittelt werden.

Ein weiteres Ziel der Erfindung ist es, eine Schaltungsanordnung der eingangs beschriebenen Art anzugeben, bei dem die Funktion der Ansteuerung eines Motors und die Funktion der Ermittlung der Läuferposition durch eine einfache Baugruppe realisiert werden.

Erfindungsgemäß wird dies dadurch erreicht, daß ein Meßstromgenerator vorgesehen ist, daß die Meßschaltung aus einer Spannungsmeßschaltung zum Messen des durch den Meßstrom erzeugten Blindspannungsabfalls an den Ständerwicklungen gebildet ist, sodaß für jede angesteuerte Sollwert-Position des Läufers die Induktivität der angesteuerten Ständerwicklungen bestimmbar ist.

Dies erlaubt einen einfachen und somit wartungsfreundlichen Aufbau der Schaltungsanordnung.

Bei einer bevorzugten Ausführungsform der Erfindung kann vorgesehen sein, daß die Erregerstromgeneratoren aus Sinusspannungsgeneratoren und die Meßstromgeneratoren aus Rechteckspannungsgeneratoren gebildet sind, deren Ausgänge mit den Eingängen jeweils eines Überlagerungsschaltkreises verbunden sind, welcher der sinusförmigen Spannung die rechteckförmige Spannung überlagert, daß der Ausgang des Überlagerungsschaltkreises mit dem Eingang eines Integrationsgliedes verbunden ist, daß der Ausgang des Integrationsgliedes mit dem Eingang eines Spannungs/Stromwandlers verbunden ist, der an seinem Ausgang mit je einer der Ständerwicklungen des Motors verbunden ist und daß die Meßschaltung durch einen Differenzverstärker gebildet ist, welcher mit seinen beiden Eingängen mit der jeweiligen Ständerwicklung und mit seinem Ausgang mit dem Eingang der jeweiligen Regelschaltung verbunden ist.

Die beiden Spannungssignale können mit hoher Qualität durch einfache Schaltungsaufbauten erzeugt werden; somit wird also ein präzises Ansteuern der Ständerwicklungen sowie exakte Meßergebnisse erreicht.

In diesem Zusammenhang kann vorgesehen sein, daß das Integrationsglied durch einen Operationsverstärker gebildet ist, dessen Ausgang über eine Parallelschaltung von einem Widerstand und einem Kondensator mit seinem invertierenden Eingang verbunden ist und dessen nicht invertierender Eingang mit Masse verbunden ist.

Ein derartig ausgeführtes Integrationsglied arbeitet in allen Frequenzbereichen des Wicklungsansteuersignales sehr genau.

Weiters kann vorgesehen sein, daß der Differenzverstärker durch einen Operationsverstärker gebildet ist, dessen invertierender Eingang einerseits über einen ersten Widerstand mit dem Ausgang und andererseits über einen zweiten Widerstand mit dem ersten Wicklungsende der Ständerwicklung verbunden ist und dessen nicht invertierender Eingang einerseits über einen dritten Widerstand mit Masse und andererseits über einen vierten Widerstand mit dem zweiten Wicklungsende der Ständerwicklung verbunden ist.

Dadurch wird exakt jene Spannung, welche wirklich an der Ständerwicklungsspule anliegt, abgegriffen und weiterverarbeitet.

Ein weiteres Merkmal der Erfindung kann sein, daß der Spannungs/Stromwandler durch einen Operationsverstärker gebildet ist, dessen invertierender Eingang einerseits über einen Widerstand mit Masse und andererseits über die Ständerwicklung mit seinem Ausgang verbunden ist und dessen nicht invertierender Eingang den Eingang des Spannungs/Stromwandlers bildet.

Ein solcher Spannung/Stromwandler ist gut steuerbar und arbeitet auch bei hohen Meßfrequenzen zuverlässig.

Das erfindungsgemäße Verfahren für einen Rotations- oder Linear-Motor, z.B. einen Schrittmotor, einen Synchronmotor od. dgl., mit zumindest zwei Ständerwicklungen 6, 60 und einem Läufer mit ausgeprägten Polen, bei welchem in einem Regelablauf der Istwert der Läuferposition, z.B. Läufer-Drehwinkel oder Läufer-Verschiebung, gegenüber einem angesteuerten Sollwert bestimmt und der Erregerstrom zum Erreichen der Sollwert-Position des Läufers in Abhängigkeit der Induktivität der angesteuerten Ständerwicklungen 6, 60 geändert wird, wird im folgenden näher beschrieben.

Wird beispielsweise ein Schrittmotor von einem Positionsregelkreis angesteuert, so muß seine aktuelle Position bestimmt werden, um diese mit der Sollposition zu vergleichen und entsprechend dem Ergebnis dieses Vergleiches die aktuelle Position der Sollposition anzupassen. Bei Motoren mit ausgeprägten Läuferpolen ist die Induktivität der Ständerwicklungen von der Position des Läufers abhängig, sodaß diese als Maß für die Istwert-Position des Läufers herangezogen werden kann.

Durch den Effekt der Eisensättigung besteht kein linearer Zusammenhang zwischen dem Erregerstrom in den Ständerwicklungen und der dadurch entstehenden Durchflutung. Negativ wirkt sich dieser nichtlineare Zusammenhang z.B. dann aus, wenn zur Überwindung der auf das doppelte angestiegenen mechanischen Belastung des Motors dieser mit dem doppelt so hohen Erregerstrom angesteuert wird. Die Durchflutung wird sich in dieser Situation nicht wie der Erregerstrom verdoppeln, sondern sich nur mäßig, um einen zu kleinen Wert vergrößern, wodurch die erhöhte mechanischen Last jedoch nicht überwunden werden kann. Diese Nichtlinearität ist bestimmt von der Stromabhängigkeit der relativen Permeabilität des Eisenkreises. Sowohl die Durchflutung als auch die Induktivität einer Spule mit Eisenkern sind hingegen linear von der relativen Permeabilität abhängig. Somit kann die nichtlineare Abhängigkeit der Durchflutung vom Strom durch Messung der Induktivität und dementsprechende Nachführung des Erregerstromes erreicht werden.

$F = k1 * \mu r * i$    k1...Konstante des Eisenkreises Eisenkreises  $\mu r$...relative Permeabilität i..... Spulenstrom F....Durchflutung

$$L = k2*\mu r$$

k2...Konstante der Spule Spule L....Induktivität der Spule

Sind die beiden Materialkonstanten kl und k2 bekannt, so kann nach Messung der Induktivität der Spule auch die tatsächliche Durchflutung bestimmt werden:

$$F = (k1*L*i)/k2$$

Durch einen Regelkreis kann der Spulenstrom so verändert werden, daß der Sollwert der Durchflutung immer erreicht wird und vorher beschriebene Ansteuerungsprobleme vermieden werden.

Da die Induktivität einer Ständerwicklung bei Motoren mit ausgeprägten Polen direkt mit der Position des Läufers zusammenhängt, kann aus der ermittelten Induktivität der Ständerwicklung auch auf die Position des Läufers geschlossen werden.

Die Bestimmung der Induktivität erfolgt erfindungsgemäß durch Beobachtung der Spannung an der Ständerwicklung bei Veränderung des Stromes:

$$u = L*(di/dt)$$

Eine Vereinfachung dieser Formel wird dadurch erreicht, wenn di/dt für jede Messung konstant und bekannt ist. Dies erreicht man durch eine zeitlineare Veränderung des Stromes, d.h. mit einem dreieckförmigen Zeitverlauf des Stromes. Wird die Amplitude des derartigen Meßstromes und seine Frequenz so gewählt, daß er zum Antrieb des Motors keinen Beitrag leisten, so kann er dem zum Antrieb des Motors notwendigen Erregerstrom der Ständerwicklungen überlagert werden. Diese Bedingung ist dann ausreichend erfüllt, wenn der Meßstrom beispielsweise eine hundertfach größere Frequenz und eine um den Faktor 100 kleinere Amplitude als der Erregerstrom aufweist.

Es ist wichtig, diese Bedingungen zu erfüllen, da durch das periodische Meßsignal hervorgerufene Änderungen der Ständerdurchflutung zu ungleichförmigen Bewegungen führen könnten, die sich z.B. bei genauen Positionieraufgaben sehr störend auswirken. Die Bestimmung der Induktivität der angesteuerten Ständerwicklung erfolgt nach dem erfindungsgemäßen Verfahren also dadurch, daß dem Erregerstrom der angesteuerten Ständerwicklungen ein periodischer Meßstrom überlagert wird, der eine größere Frequenz als die Lauffrequenz des Motors aufweist und die Erregung der Ständerwicklung im wesentlichen nicht beeinflußt, und daß der durch den Meßstrom bewirkte Blindspannungsabfall an der Ständerwicklung gemessen und daraus die Induktivität ermittelt wird.

Da für diese Ermittlung nur ein einfacher Rechenschritt notwendig ist (vgl. obige Formel), kann diese Berechnung schnell und mit der notwendigen Genauigkeit schon von einfach aufgebauten Rechenwerken durchgeführt werden.

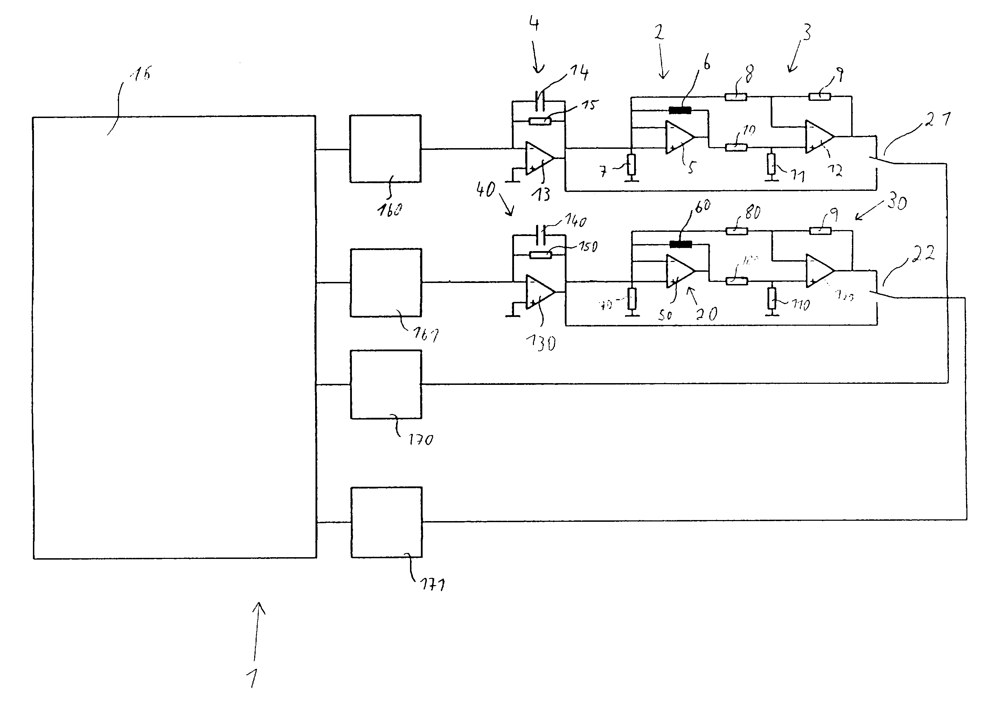

Die erfindungsgemäße Schaltungsanordnung, bei der zum Ansteuern der Ständerwicklungen 6, 60 des Motors diese mit Erregerstromgeneratoren verbunden sind und jeweils ein Steuereingang dieser Erregerstromgeneratoren zum Ausgleichen der Sollwertabweichung der Läuferposition mit dem Ausgang jeweils einer Regelschaltung verbunden sind, deren Ausgangsspannung durch die Induktivität der angesteuerten Ständerwicklung 6, 60 bestimmt ist, wobei die Ständerwicklungen 6, 60 mit dem Eingang jeweils einer Meßschaltung 3, 30 verbunden sind und deren Ausgänge mit den Eingängen der Regelschaltungen verbunden sind, wird nun anhand einer in der Zeichnung dargestellten bevorzugten Ausführungsform näher beschrieben.

Die erfindungsgemäße Schaltungsanordnung arbeitet nach folgendem Prinzip: Es ist ein Meßstromgenerator vorgesehen, welcher das dem Erregerstrom überlagerte Meßsignal erzeugt. Die Meßschaltung ist aus einer Spannungsmeßschaltung 3, 30 zum Messen des durch den Meßstrom erzeugten Blindspannungsabfalls an den Ständerwicklungen 6, 60 gebildet, sodaß für jede angesteuerte Sollwert-Position des Läufers die Induktivität der angesteuerten Ständerwicklungen 6, 60 bestimmbar ist.

Bei der in der Zeichnung dargestellten Ausführungsform der Erfindung, die für zwei Ständerwicklungen aufweisende Schrittmotoren ausgelegt ist, wird das eben beschriebene Funktionsprinzip realisiert. Dadurch ist aber die Erfindung hinsichtlich der Bauform der Motoren nicht eingeschränkt, vielmehr kann die Läuferposition jedes beliebigen, ausgeprägte Läuferpole aufweisenden Motors, z.B. ein Synchronmotor od. dgl., erfindungsgemäß bestimmt werden.

Die Erregerstromgeneratoren sind aus Sinusspannungsgeneratoren und die Meßstromgeneratoren aus Rechteckspannungsgeneratoren gebildet, deren Ausgänge mit den Eingängen jeweils eines Überlagerungsschaltkreises verbunden sind, welcher der sinusförmigen Spannung die rechteckförmige Spannung überlagert. Der Sinus- und der Rechteckspannungsgenerator sowie der Überlagerungsschaltkreis werden durch einen digitalen Signalprozessor 16 gebildet. Der Ausgang des Überlagerungsschaltkreises ist über einen Digital/Analog-Wandler 160 bzw. 161 mit dem Eingang eines Integrationsgliedes 4 bzw. 40 verbunden.

Dieses Integrationsglied 4 bzw. 40 ist durch einen Operationsverstärker 13 bzw. 130 gebildet, dessen Ausgang über eine Parallelschaltung von einem Widerstand 15 bzw. 150 und einem Kondensator 14 bzw. 140 mit seinem invertierenden Eingang verbunden ist und dessen nicht invertierender Eingang mit Masse verbunden ist.

Durch ein solches Integrationsglied 4 bzw. 40 werden sinus- bzw. cosinusförmige Spannungen in ihrer Kurvenform nicht verändert, sondern lediglich phasenverschoben. Die überlagerte Rechteckspannung wird jedoch zu einer Spannung mit dreieckförmigen Zeitverlauf umgeformt.

Der Ausgang des Integrationsgliedes 4 bzw. 40 ist mit dem Eingang eines Spannungs/Stromwandlers 2 bzw. 20 verbunden, dessen Ausgang mit der Ständerwicklung 6 bzw. 60 des Schrittmotors verbunden ist.

Der Spannungs/Stromwandler 2 bzw. 20 ist durch einen Operationsverstärker 5 bzw. 50 gebildet, dessen invertierender Eingang einerseits über einen Widerstand 7 bzw. 70 mit Masse und andererseits über die Ständerwicklung 6 bzw. 60 mit seinem Ausgang verbunden ist und dessen nicht invertierender Eingang den Eingang des Spannungs/Stromwandlers 2 bzw. 20 bildet.

Dieser Spannung/Stromwandler 2 bzw. 20 setzt die vom Signalprozessor 16 berechneten und ausgegebenen Ansteuer- und Meßsignale in die zur Wicklungsansteuerung notwendigen Ströme um.

Die Meßschaltung 3 bzw. 30 ist durch einen Differenzverstärker gebildet, welcher mit seinen beiden Eingängen mit der Ständerwicklung und mit seinem Ausgang mit dem Eingang der Regelschaltung verbindbar ist. Auch die eben erwähnte Regelschaltung ist durch den Signalprozessor 16 gebildet, wodurch es notwendig ist, daß der Ausgang des Differenzverstärkers über einen Analog/Digitalwandler 170 bzw. 171 mit dem Eingang der Regelschaltung verbindbar ist.

Der Differenzverstärker ist durch einen Operationsverstärker 12 bzw. 120 gebildet, dessen invertierender Eingang einerseits über einen ersten Widerstand 9. bzw. 90 mit dem Ausgang und andererseits über einen zweiten Widerstand 8 bzw. 80 mit dem ersten Wicklungsende der Ständerwicklung 6 bzw. 60 verbunden ist und dessen nicht invertierender Eingang einerseits über einen dritten Widerstand 11 bzw. 110 mit Masse und andererseits über einen vierten Widerstand 10 bzw. 100 mit dem zweiten Wicklungsende der Ständerwicklung 6 verbunden ist.

Da keiner der beiden Anschlüsse der Ständerwicklung 6 bzw. 60 an einem definierten und bekannten Potential liegt, ist es nicht möglich, lediglich das Potential eines Wicklungsanschlusses abzugreifen und daraus die an der Ständerwicklung 6 bzw. 60 anliegende Spannung zu berechnen. Es muß daher, wie in der Zeichnung dargestellt, ein Differenzverstärker vorgesehen sein, dessen Ausgangsspannung von der Differenz der Potentiale der beiden Wicklungsanschlüsse bestimmt ist.

Mithilfe des Schalters 21 bzw. 22 ist der Eingang der Regelschaltung wahlweise mit dem Ausgang der Meßschaltung 3 bzw. 30 oder mit dem Ausgang des Integrationsgliedes 4 bzw. 40 verbindbar. Dadurch kann die vom Integrationsglied 4 bzw. 40 erzeugte Spannung überprüft werden und durch Bauteiltoleranzen eventuell entstehende "Unsauberkeiten" der Ständerwicklungsansteuerspannung bei der Berechnung der Induktivität der Ständerwicklung berücksichtigt werden.

**Patentansprüche**

1. Verfahren zur Läuferpositionsbestimmung für einen Rotations- oder Linear-Motor, z.B. einen Schrittmotor, einen Synchronmotor od. dgl., mit zumindest zwei Ständerwicklungen (6, 60) und einem Läufer mit ausgeprägten Polen, bei welchem in einem Regelablauf der Istwert der Läuferposition, z.B. Läufer-Drehwinkel oder Läufer-Verschiebung, gegenüber einem angesteuerten Sollwert bestimmt und der Erregerstrom zum Erreichen der Sollwert-Position des Läufers in Abhängigkeit der Induktivität der angesteuerten Ständerwicklungen geändert wird, **dadurch gekennzeichnet,** daß dem Erregerstrom der angesteuerten Ständerwicklungen (6, 60) ein periodischer Meßstrom überlagert wird, der eine größere Frequenz als die Lauffrequenz des Motors aufweist und die Erregung der Ständerwicklung im wesentlichen nicht beeinflußt, und daß der durch den Meßstrom bewirkte Blindspannungsabfall an der Ständerwicklung gemessen und daraus die Induktivität ermittelt wird.

2. Verfahren nach Anspruch 1, **dadurch gekennzeichnet**, daß der Meßstrom dreieckförmig ist.

3. Schaltungsanordnung zur Durchführung des Verfahrens nach einem der Ansprüche 1 oder 2, wobei zum Ansteuern der Ständerwicklungen (6, 60) des Motors diese mit Erregerstromgeneratoren verbunden sind und jeweils ein Steuereingang dieser Erregerstromgeneratoren zum Ausgleichen der Sollwertabweichung der Läuferposition mit dem Ausgang jeweils einer Regelschaltung verbunden sind, deren Ausgangsspannung durch die Induktivität der angesteuerten Ständerwicklung (6, 60) bestimmt ist, wobei die Ständerwicklungen (6, 60) mit dem Eingang jeweils einer Meßschaltung (3, 30) verbunden sind und deren Ausgänge mit den Eingängen der Regelschaltungen verbunden sind, **dadurch gekennzeichnet,** daß ein Meßstromgenerator vorgesehen ist, daß die Meßschaltung aus einer Spannungsmeßschaltung (3, 30) zum Messen des durch den Meßstrom erzeugten Blindspannungsabfalls an den Ständerwicklungen (6, 60) gebildet ist, sodaß für jede angesteuerte Sollwert-Position des Läufers die Induktivität der angesteuerten Ständerwicklungen (6, 60) bestimmbar ist.

4. Schaltungsanordnung nach Anspruch 3, **dadurch gekennzeichnet,** daß die Erregerstromgeneratoren aus Sinusspannungsgeneratoren und die Meßstromgeneratoren aus Rechteckspannungsgeneratoren gebildet sind, deren Ausgänge mit den Eingängen jeweils eines Überlagerungsschaltkreises verbunden sind, welcher der sinusförmigen Spannung die rechteckförmige Spannung überlagert, daß der Ausgang des Überlagerungsschaltkreises mit dem Eingang eines Integrationsgliedes (4, 40) verbunden ist, daß der Ausgang des Integrationsgliedes (4, 40) mit dem Eingang eines Spannungs/Stromwandlers (2, 20) verbunden ist, der an seinem Ausgang mit je einer der Ständerwicklungen (6, 60) des Motors verbunden ist und daß die Meßschaltung (3, 30) durch einen Differenzverstärker gebildet ist, welcher mit seinen beiden Eingängen mit der jeweiligen Ständerwicklung (6, 60) und mit seinem Ausgang mit dem Eingang der jeweiligen Regelschaltung verbunden ist.

5. Schaltungsanordnung nach Anspruch 4, **dadurch gekennzeichnet,** daß das Integrationsglied (4, 40) durch einen Operationsverstärker (13, 130) gebildet ist, dessen Ausgang über eine Parallelschaltung von einem Widerstand (15, 150) und einem Kondensator (14, 140) mit seinem invertierenden Eingang verbunden ist und dessen nicht invertierender Eingang mit Masse verbunden ist.

6. Schaltungsanordnung nach Anspruch 4, **dadurch gekennzeichnet**, daß der Differenzverstärker durch einen Operationsverstärker (12, 120) gebildet ist, dessen invertierender Eingang einerseits über einen ersten Widerstand (9, 90) mit dem Ausgang und andererseits über einen zweiten Widerstand (8, 80) mit dem ersten Wicklungsende der Ständerwicklung (6, 60) verbunden ist und dessen nicht invertierender Eingang einerseits über einen dritten Widerstand (11, 110) mit Masse und andererseits über einen vierten Widerstand (10, 100) mit dem zweiten Wicklungsende der Ständerwicklung (6, 60) verbunden ist.

7. Schaltungsanordnung nach Anspruch 4, **dadurch gekennzeichnet,** daß der Spannungs/Stromwandler (2, 20) durch einen Operationsverstärker (5, 50) gebildet ist, dessen invertierender Eingang einerseits über einen Widerstand (7, 70) mit Masse und andererseits über die Ständerwicklung (6, 60) mit seinem Ausgang verbunden ist und dessen nicht invertierender Eingang den Eingang des Spannungs/Stromwandlers (2, 20) bildet.